# EUROPÄISCHE PATENTSCHRIFT

(11) **EP 1 475 945 B1**
(45) Veröffentlichungstag und Bekanntmachung des Hinweises auf die Patenterteilung: **10.10.2012**
(21) Anmeldenummer: 04010679.1
(22) Anmeldetag: 05.05.2004
(51) Int. Cl.: H04M 3/493

(54) **VERFAHREN ZUR HERSTELLUNG EINER SPRACHKOMMUNIKATIONSVERBINDUNG MITTELS EINER TELEFONBUCH-DATENBANK**
METHOD FOR ESTABLISHING A VOICE COMMUNICATION USING A TELEPHONE DIRECTORY
PROCÉDÉ D' ÉTABLISSEMENT D'UNE CONNEXION VOCALE UTILISANT UNE BASE DE DONNÉE D'ANNUAIRE DE TÉLÉPHONIQUE

(30) Priorität: 06.05.2003 DE 10320319; 20.06.2003 DE 10328090
(43) Veröffentlichungstag der Anmeldung: 10.11.2004
(73) Patentinhaber: adviqo AG, 10117 Berlin (DE)
(72) Erfinder: Kohl, Ulrich Dr., 13465 Berlin (DE)
(74) Vertreter: Michalski Hüttermann & Partner

(56) Entgegenhaltungen:
- WO-A-99/40712
- DE-A1- 10 051 663
- US-A1- 2001 016 826
- US-B1- 6 230 287

## Beschreibung

Die Erfindung betrifft ein Verfahren zur Herstellung einer Sprachkommunikationsverbindung zwischen einem Anrufer und einem Kommunikationspartner, wobei eine Datenbank bereitgestellt wird, die Daten über eine Mehrzahl von Kommunikationspartnern enthält, dem Anrufer auf dessen Abfrage hin wenigstens ein Kommunikationspartner aus der Datenbank angeboten wird und zu wenigstens einem der angebotenen Kommunikationspartner automatisch eine Sprachkommunikation aufgebaut wird, nachdem der Kommunikationspartner von dem Anrufer ausgewählt worden ist.

Ein Verfahren der eingangs genannten Art ist z. B. aus der DE 100 51 663 A1 bekannt. Dort ist ein Auskunftssystem beschrieben, bei dem unmittelbar eine Sprachverbindung von einem Interessenten, nämlich dem Anrufer, zu einem Experten, dem Kommunikationspartner, hergestellt wird. Allgemein ist es aus dem Stand der Technik bekannt, Interessenten mit Hilfe von klassischen Call Center-Anlagen, die über eine zentrale Zugangsnummer erreichbar sind, Experten zu vermitteln. Ein Anruf wird dabei im allgemeinen mit einer aufgezeichneten Ansage beantwortet, woraufhin der Anrufer eine Mehrzahl von Auswahlmöglichkeiten zur Verfügung gestellt bekommt, um dann mit Hilfe der Tonwahltasten seines Telefons oder mit Hilfe von "Interactive Voice Response" (IVR) schließlich zu einem Experten verbunden zu werden. Auf diese Weise werden z. B. technische Hotlines größerer Unternehmen betrieben.

Weiterhin sind sogenannte Web Call Back-Anlagen bekannt, bei denen eine Verbindung zu einem Experten mittels einer auf einer Internet-Seite zu initiierenden Call Back-Funktion ermöglicht wird, z. B. durch Anklicken einer entsprechenden Schaltfläche auf einer Internet-Seite. Ansonsten entspricht dieses Zugangsprinzip im wesentlichen dem zuvor beschriebenen Zugangsprinzip zu einer klassischen Hotline.

Es sind jedoch auch Systeme bekannt, bei denen eine Vielzahl von Experten zur Verfügung steht, wobei die Experten sich an beliebigen Orten befinden können, sich insbesondere nicht in einem gemeinsamen Call Center befinden. Bei solchen Systemen, die dazu geeignet sind, eine Vielzahl von Experten mit entsprechenden Anrufern zu verbinden, werden die relevanten Informationen über die Experten in einer Datenbank bereitgestellt werden, so daß durch eine entsprechende Datenbankabfrage ein geeigneter Experte ausgewählt und eine Sprachkommunikationsverbindung zu ihm hergestellt werden kann. Dabei kann das Problem auftreten, daß ein bestimmter Experte von mehreren Anrufern gleichzeitig als Kommunikationspartner gewünscht wird. Bei einer "normalen" Hotline wäre dies im allgemeinen unproblematisch, da für ein Fachgebiet typischerweise mehrere im wesentlichen gleich gute Hotline-Experten zur Verfügung stehen. Problematisch ist dies jedoch dann, wenn eine ganz bestimmte Person als Experte gewünscht wird.

Bei dem in der DE 100 51 663 A1 beschriebenen und von der Anmelderin betriebenen Verfahren ist tatsächlich häufig ein ganz bestimmter Kommunikationspartner bevorzugt, nämlich entweder deshalb, weil der Anrufer diesen Experten schon kennt oder weil die Datenbankabfrage genau diesen Experten als den geeignetsten ermittelt hat. Führt dieser Kommunikationspartner jedoch schon ein Gespräch, so ist die Herstellung einer weiteren Sprachverbindung und das Führen einer gleichzeitigen Kommunikation mit zwei Anrufern natürlich nicht sinnvoll, so daß der Anrufer zu einem späteren Zeitpunkt erneut versuchen muß, eine Sprachkommunikationsverbindung zu dem von ihm gewünschten Kommunikationspartner herzustellen. Dies wird von dem Anrufer jedoch häufig als nicht effizient angesehen.

Weitere Konzepte finden sich in den Dokumenten WO 99/40712, US 6,230,287 B1 sowie US 2001/016826.

Vor dem Hintergrund dieser Problematik ist es die Aufgabe der Erfindung, das eingangs beschriebene Verfahren effizienter zu gestalten, insbesondere nämlich die Herstellung der Sprachkommunikationsverbindungen zu den Kommunikationspartnern zu verbessern.

Ausgehend von dem eingangs beschriebenen Verfahren ist die zuvor hergeleitete und aufgezeigte Aufgabe dadurch gelöst, daß bis zur Herstellung der Sprachkommunikationsverbindung zwischen dem Anrufer und dem von dem Anrufer ausgewählten Kommunikationspartner oder bis zu einer sonstigen Beendigung des Verfahrens keine Sprachkommunikationsverbindung zwischen einem späteren Anrufer und einem der dem Anrufer angebotenen Kommunikationspartner hergestellt wird.

Erfindungsgemäß ist also gewährleistet, daß die dem Anrufer, nämlich dem ersten Anrufer, angebotenen Kommunikationspartner nicht während des Anbietens an einen anderen, also zweiten Anrufer vermittelt werden, so daß im allgemeinen unmittelbar nach der Auswahl einer der angebotenen Kommunikationspartner eine Sprachkommunikationsverbindung von dem ersten Anrufer zu diesem Kommunikationspartner hergestellt werden kann. Sogenannte "Race Condition"-Fälle, in denen dem Anrufer eine Mehrzahl von Kommunikationspartnem angezeigt wird, der Anrufer für seine Entscheidung bezüglich des für ihn geeignetsten Kommunikationspartners einer gewissen Zeitdauer bedarf und bei der tatsächlichen Auswahl des Kommunikationspartners dieser mittlerweile nicht mehr verfügbar ist, nämlich ein Gespräch mit einem zweiten Anrufer führt, können somit nicht mehr auftreten.

Grundsätzlich ist es möglich, daß die Kommunikationspartner, zu denen bereits eine Sprachkommunikationsverbindung von anderen Anrufern hergestellt ist, dem Anrufer nicht angeboten werden. Damit wäre immer gewährleistet, daß die angebotenen Kommunikationspartner tatsächlich frei und damit an den Anrufer vermittelbar sind. Der Anrufer würde dann jedoch nicht erkennen können, daß diese potentiellen, gegenwärtig jedoch nicht freien Kommunikationspartner überhaupt existieren.

Gemäß einer bevorzugten Weiterbildung der Erfindung ist es insofern vorgesehen, daß die Herstellung der Sprachkommunikationsverbindung zwischen dem Anrufer und dem von dem Anrufer ausgewählten Kommunikationspartner gegenüber der Auswahl des Kommunikationspartners zeitverzögert erst dann erfolgt, wenn eine schon bestehende Sprachkommunikationsverbindung zwischen dem Kommunikationspartner und einem anderen Anrufer beendet worden ist. Auf diese Weise können nämlich alle grundsätzlich geeigneten Kommunikationspartner, also auch die gegenwärtig nicht freien, dem Anrufer angezeigt werden, wobei vorzugsweise auch angegeben wird, ob der jeweilige Kommunikationspartner gegenwärtig frei ist oder bereits ein Gespräch führt.

Entscheidet sich der Anrufer für einen Kommunikationspartner, der bereits ein Gespräch führt, so wird der Anrufer in eine Warteschlange eingereiht. Diese Warteschlange bewirkt, daß der Anrufer gegenüber seiner Auswahl dieses Kommunikationspartners zeitverzögert zu seinem gewünschten Gespräch kommt, nämlich dann, und vorzugsweise unmittelbar dann, wenn der gewünschte Kommunikationspartner wieder frei geworden ist, also die bisher bestehende Sprachkommunikationsverbindung zwischen dem Kommunikationspartner und einem anderen Anrufer beendet worden ist.

Eine solche Warteschlange kann natürlich auch beinhalten, daß mehr als ein wartender Anrufer aufgenommen wird. Daß erfindungsgemäß bis zur Herstellung der Sprachkommunikationsverbindung zwischen dem Anrufer und dem von dem Anrufer ausgewählten Kommunikationspartner oder bis zu einer sonstigen Beendigung des Verfahrens keine Sprachkommunikationsverbindung zwischen einem späteren Anrufer und einem der dem Anrufer angebotenen Kommunikationspartner hergestellt wird, heißt also nicht, daß überhaupt keine Sprachkommunikationsverbindungen mit anderen Anrufern hergestellt werden können. Insbesondere sind natürlich solche Anrufer, die sich schon in die Warteschlange eingereiht haben, bevorzugt, stellen sie doch keine "späteren" Anrufer im Sinne der Erfindung dar.

In diesem Zusammenhang ist gemäß einer bevorzugten Weiterbildung der Erfindung insbesondere auch vorgesehen, daß angegeben wird, wie viele Anrufer vor ihm einen entsprechenden Kommunikationspartner zu sprechen wünschen. Dies kann mit ausschlaggebend dafür sein, ob eine Auswahl eines solchen Kommunikationspartners durch den Anrufer erfolgt. Gegebenenfalls wird der Anrufer nämlich lieber einen solchen Kommunikationspartner auswählen, der gegenwärtig schon frei ist bzw. nur einen oder wenige wartende Anrufer in seiner Warteschlange hat.

Die Warteschlange kann auf verschiedene Weisen organisiert sein. Bei der Warteschlange handelt es sich vorzugsweise jedoch um eine solche Warteschlange, die nach dem FIFO-Prinzip (First In First Out) funktioniert: Derjenige der sich als erster eingereiht hat, also schon am längsten wartet, wird zuerst mit dem gewünschten Kommunikationspartner verbunden, wenn dieser wieder frei geworden ist.

Die Verbindung mit dem gewünschten Kommunikationspartner, also die Herstellung der Sprachkommunikationsverbindung zwischen dem Anrufer und dem gewünschten Kommunikationspartner, kann auf verschiedene Weisen erfolgen. Dabei ist gemäß einer bevorzugten Weiterbildung der Erfindung vorgesehen, daß die Herstellung der Sprachkommunikationsverbindung zwischen dem Anrufer und dem Kommunikationspartner durch Anruf des Kommunikationspartners und Rückruf des Anrufers erfolgt.

Dies ist aus mehreren Gründen vorteilhaft: Einerseits muß der Anrufer seine Zeit bis zur Herstellung der Kommunikationsverbindung mit dem Kommunikationspartner nicht am Telefon verbringen. Der Anrufer wird also erst dann zurückgerufen, wenn sein Gespräch mit dem Kommunikationspartner auch beginnen kann. Insofern würde der Anrufer auch dann nicht zurückgerufen werden, wenn der Kommunikationspartner z. B. nicht erreichbar wäre. Damit ist auch ein zeitversetztes Anrufen des Kommunikationspartners bzw. Rückrufen des Anrufers, vorzugsweise nämlich in dieser Reihenfolge, vorteilhaft, wobei ein gleichzeitiges Anrufen des Kommunikationspartners einerseits und Rückrufen des Anrufers andererseits insgesamt weniger Zeit erfordert. Insbesondere kann dann nämlich ein automatischer Rückruf des Anrufers unmittelbar nach Beendigung eines bisher geführten Gesprächs des Kommunikationspartners erfolgen.

Was die zuvor schon angesprochene sonstige Beendigung des Verfahrens angeht, so kann vorgesehen sein, daß eine sonstige Beendigung des Verfahrens nach einer fest vorbestimmten und/oder einer von dem jeweiligen Anrufer festgelegten Zeitdauer erfolgt. Dies gilt gemäß einer bevorzugten Weiterbildung der Erfindung insbesondere auch für die Warteschlange, so daß der Anrufer bestimmen kann, wie lange er bereit ist, in der Warteschlange auf die Herstellung der Sprachkommunikationsverbindung zu dem Kommunikationspartner zu warten.

Grundsätzlich ist der Zugriff auf die Datenbank über ein Datennetz, wie das Internet, möglich. Dazu kann z. B. eine Internet-Seite bereitgestellt werden, über die eine Abfrage an die Datenbank gestellt werden kann und auf der die Datenbankergebnisse angezeigt werden. Die Herstellung einer Sprachkommunikationsverbindung zu einem ausgewählten Kommunikationspartner kann somit durch einfaches Anklicken des Namens oder der Kennung von einem der angebotenen Kommunikationspartner erfolgen. Gemäß einer bevorzugten Weiterbildung der Erfindung kann jedoch auch oder alternativ vorgesehen sein, daß der Zugriff auf die Datenbank über ein Telefonnetz erfolgt. Im einfachsten Fall ist dazu ein Call Center eingerichtet, wobei ein Call Center-Mitarbeiter mit dem Anrufer kommuniziert und dessen Wünsche über einen Browser auf der Internet-Seite eingibt. Es sind dazu jedoch auch andere Techniken, wie IVR oder Sprachdialogsysteme, möglich.

Insbesondere ist eine ganz bevorzugte Ausführungsform des erfindungsgemäßen Verfahrens zur Herstellung einer Sprachkommunikationsverbindung zwischen einem Anrufer und einem Kommunikationspartner derart ausgestaltet, daß eine Datenbank bereitgestellt wird, die Daten über eine Mehrzahl von Kommunikationspartnern enthält, dem Anrufer auf dessen Abfrage hin wenigstens ein Kommunikationspartner aus der Datenbank angeboten wird und zu wenigstens einem der angebotenen Kommunikationspartner automatisch eine Sprachkommunikationsverbindung aufgebaut wird, nachdem der Kommunikationspartner von dem Anrufer ausgewählt worden ist, wobei nach Auswahl des Kommunikationspartners von dem Anrufer die Sprachkommunikationsverbindung zwischen dem Anrufer und dem von dem Anrufer ausgewählten Kommunikationspartner unmittelbar hergestellt wird, wenn der Kommunikationspartner verfügbar ist, und im Falle, daß der ausgewählte Kommunikationspartner nicht verfügbar ist, der Anrufer, vorzugsweise nach dem FIFO-Prinzip, in eine Warteschlange für den ausgewählten Kommunikationspartner eingereiht wird. Erfindungsgemäß ist bei diesem Verfahren sichergestellt, daß bis zur Herstellung der Sprachkommunikationsverbindung zwischen dem Anrufer und dem von dem Anrufer ausgewählten Kommunikationspartner oder bis zu einer sonstigen Beendigung des Verfahrens keine Sprachkommunikationsverbindung zwischen einem späteren Anrufer und einem der dem Anrufer angebotenen Kommunikationspartner hergestellt wird, also unmittelbar die Herstellung einer Sprachkommunikationsverbindung zwischen dem Anrufer und dem ausgewählten Kommunikationspartner erfolgt oder lediglich diejenigen Anrufer vorher mit dem Kommunikationspartner verbunden werden, die sich schon in der Warteschlange für diesen Kommunikationspartner befinden.

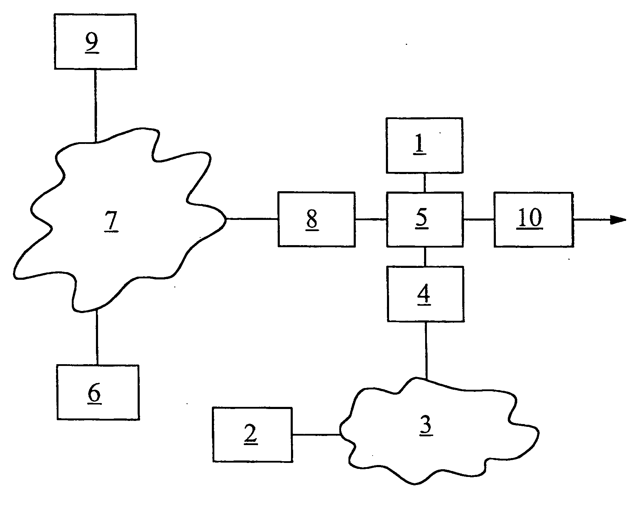

Im einzelnen gibt es nun eine Vielzahl von Möglichkeiten das erfindungsgemäße Verfahren zur Herstellung einer Sprachkommunikationsverbindung auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt die einzige Figur schematisch ein Verfahren zur Herstellung einer Sprachkommunikationsverbindung zwischen einem Anrufer und einem Kommunikationspartner gemäß einem bevorzugten Ausführungsbeispiel der Erfindung.

Bei dem Verfahren gemäß dem vorliegend beschriebenen bevorzugten Ausfiihrungsbeispiel der Erfindung handelt es sich um einen Dienst, mit dem Ratsuchende, die Anrufer, zu Experten, den Kommunikationspartnern, vermittelt werden und mit diesen telefonisch in Kontakt treten können. Dazu ist eine Datenbank 1 vorgesehen, die Daten über die Experten enthält, wie deren Fachgebiet und Spezialisierungen, deren Kosten, typischerweise ein Minutenpreis, und deren Sprechzeiten. Grundsätzlich kann sich jeder als Experte in die Datenbank 1 eintragen oder eintragen lassen und steht dann zur Vermittlung an Ratsuchende bereit.

In diesem Zusammenhang sei lediglich am Rande erwähnt, daß zur Qualitätssicherung ein Bewertungssystem der Experten vorgesehen sein kann, so daß ein Ratsuchender schon vorab, also vor dem Gespräch mit einem bestimmten Experten, die Qualität des Experten beurteilen kann, nämlich die Bewertungen anderer Ratsuchender einsehen kann. Entsprechendes ist im übrigen auch schon im Zusammenhang mit Online-Auktionen bekannt.

Neben Daten über die Experten enthält die Datenbank auch Daten über die Ratsuchenden. Diese müssen sich vor Nutzung des vorliegend beschriebenen Dienstes in der Datenbank 1 eintragen, sich dort nämlich mit ihrem Namen und insbesondere auch mit ihren Abrechnungsdaten registrieren. Diese Abrechnungsdaten sind erforderlich, um eine Bezahlung des Experten einerseits sowie des vermittelnden Dienstanbieters andererseits zu ermöglichen. Darüber hinaus werden für die Ratsuchenden auch deren Telefonnummer, ein Paßwort und/oder eine Telefon-PIN und gegebenenfalls ein Mitgliedsname aufgenommen, um eine Pseudoanonymität der Ratsuchenden zu erzielen: Die Ratsuchenden sind zwar unter ihrem jeweiligen Mitgliedsnamen bekannt, die tatsächliche Person hinter dem Mitgliedsnamen bleibt jedoch verborgen. Die Telefonnummer der Ratsuchenden und Paßwort/PIN sind einerseits für eine Rückruffunktion und andererseits dafür erforderlich, unberechtigten Zugang zu dem Dienst zu verhindern.

Die Eingabe der Daten in die Datenbank 1 kann auf verschiedene Weisen erfolgen. Bei dem hier beschriebenen bevorzugten Ausführungsbeispiel der Erfindung ist vorgesehen, daß Eingaben in die Datenbank 1 sowie auch an die Datenbank 1 gerichtete Abfragen über einen Browser, je nach Standort das den Browser enthaltenden Geräts, über das Internet oder ein LAN erfolgen kann. Vorliegend ist konkret vorgesehen, daß die Eingabe über einen Computer 2 erfolgt, der über das Internet 3 mit der Datenbank 1 mittelbar verbunden ist, nämlich über einen Web-Server 4 und einen Business Logik-Server 5. Dabei kann der Computer 2 vom Experten bzw. Ratsuchenden bedient werden, es ist jedoch auch möglich, daß der Computer 2, von einem Mitarbeiter des Call Centers bedient wird, der mit dem Experten bzw. Ratsuchenden in telefonischem Kontakt steht.

Für registrierte Nutzer, also registrierte Ratsuchende bzw. Experten, stellt sich der Ablauf des Verfahren gemäß dem vorliegend beschriebenen bevorzugten Ausfiihrungsbeispiel der Erfindung nun wie folgt dar: Der Ratsuchende ruft die Telefonnummer des Vermittlungsdienstes über sein Telefon 6 an. Dieser Anruf erfolgt typischerweise über das öffentliche Telefonnetz (PSTN) 7 und wird von einem Telefon-Server 8 angenommen, der mit einem IVR-System ausgestattet ist. Dabei kann die Telefonnummer des Vermittlungsdienstes eine normale Nummer sein, es ist jedoch eine Mehrwertdienstnummer wie "free call 0800" oder "shared cost 0180" sowie eine Premiumservice-Nummer (0190, 0900) möglich. Der Ratsuchende führt dann einen Dialog mit dem auf dem Telefon-Server 8 vorgesehenen IVR-System, z. B. per DTMF-Töne oder durch Spracherkennung.

Im Zuge dieses Dialogs laufen folgende Schritte ab: Zuerst bedarf es einer Identifikation des ratsuchenden Anrufers. Dies kann z. B. durch Erkennen der anrufenden, nicht unterdrückten Telefonnummer (CLIP) oder durch Eingabe dieser Telefonnummer über die Tastatur des Telefons 6 geschehen. Über den Business Logik-Server 5 erfolgt dann ein Vergleich mit den entsprechenden Daten in der Datenbank 1. Stimmt die erkannte oder eingegebene Telefonnummer mit der registrierten Telefonnummer des anrufenden Ratsuchenden überein, so wird eine Authentifikation durch Eingabe der Telefon-PIN, einem mehrstelligen Zahlencode, gefordert.

Nach erfolgreicher Authentifikation kommt es dann zur Präsentation und Auswahl des Gesprächspartners. Über das IVR-System werden dem Anrufer Kategorien und Experten genannt, unter denen er auswählen kann. Auf eine entsprechende Abfrage an die Datenbank 1 werden dem Anrufer dann Experten aus der Datenbank einschließlich deren Minutenpreis genannt. Dabei kann der Anrufer einen der genannten Experten aussuchen oder weiter durch das System navigieren.

Wesentlich ist nun, daß während der Zeit des Vorlesens der anzubietenden Experten alle durch die an die Datenbank 1 gestellte Suchabfrage gefundenen Experten exklusiv für den Anrufer reserviert werden. Vor Herstellung einer Sprachkommunikationsverbindung zwischen dem Anrufer einerseits und einem der angebotenen Kommunikationspartner andererseits bzw. vor Abbruch des Verfahrens ist es also keinem anderen Anrufer möglich, einen der angebotenen Experten zu sprechen. Weiterhin werden dem Anrufer auch solche Experten angeboten, die gegenwärtig nicht frei sind, also Gespräche mit anderen Anrufern führen. Darüber hinaus werden dem Anrufer auch solche Experten angeboten, die schon einen oder mehrere Anrufer in ihrer Warteliste haben. All dies Daten, also die Fragen, ob der Experte frei ist oder nicht und ob der Experte wartende Anrufer in seiner Warteschleife hat, werden dem Anrufer dabei konkret genannt, z. B. durch eine Ansage wie: "Experte C, Fachgebiet XYZ, x,y Euro pro Minute, gegenwärtig nicht frei, ein Anrufer in der Warteschlange".

Der Anrufer entscheidet sich nun für einen Experten, wobei er mit einem freien Experten direkt verbunden wird und im Falle eines gegenwärtig nicht freien Experten in dessen Warteschlange eingereiht wird. Die Verbindung zu dem Experten, also die Sprachkommunikationsverbindung zwischen dem Anrufer einerseits und dem als Experten fungierenden Kommunikationspartners andererseits erfolgt ebenfalls über das öffentliche Telefonnetz 7, nämlich von dem Telefon 6 des Anrufers zu dem Telefon 9 des Experten.

Die Sprachkommunikationsverbindung zwischen dem Anrufer und dem als Experten fungierenden Kommunikationspartner kann dabei entweder durch Weiterverwendung des ersten Teils der Verbindung, also vom Telefon 6 des Ratsuchenden zum Telefon-Server 8 (z. B. über 0800) und Aufbau des zweiten Teils der Verbindung durch Anruf des Experten und Konferenzschaltung der beiden Telefonate, oder durch Rückruf des Anrufers, Anruf des Experten und Konferenzschaltung erfolgen. Im Falle der Verwendung einer Warteschlange kommt es vorzugsweise zum Rückruf des Anrufers, wenn der Experte wieder frei ist, das Gespräch mit dem letzten Anrufer also beendet hat.

Nach Beendigung des Gesprächs kann der Anrufer, wie weiter oben schon angedeutet, den Kommunikationspartner im IVR-Dialog bewerten. Darüber hinaus wird der Gesprächspreis mittels eines Abrechnungs-Servers 10 direkt abgerechnet, der eine Schnittstelle zu Banken, Kreditkartengesellschaften und anderen Payment Service-Providern aufweist. Im Zuge der Abrechnung des Gesprächs kommt es einerseits zur Bezahlung des Anbieters des Vermittlungsdienstes und andererseits zur Bezahlung des Experten, mit dem das Gespräch geführt worden ist. Dabei kann im übrigen schon berücksichtigt werden, ob der zu bezahlende Experte mehrwertsteuerpflichtig ist oder nicht. Besteht keine Mehrwertsteuerpflicht, so wird nämlich auch dem Anrufer, der das Gespräch mit dem Experten geführt hat, keine Mehrwertsteuer berechnet.

## Patentansprüche

1. Verfahren zur Herstellung einer Sprachkommunikationsverbindung zwischen einem Anrufer und einem Kommunikationspartner, wobei eine Datenbank (1) bereitgestellt wird, die Daten über eine Mehrzahl von Kommunikationspartnern enthält, dem Anrufer auf dessen Abfrage hin wenigstens ein Kommunikationspartner aus der Datenbank (1) angeboten wird und zu wenigstens einem der angebotenen Kommunikationspartner automatisch eine Sprachkommunikationsverbindung aufgebaut wird, nachdem der Kommunikationspartner von dem Anrufer ausgewählt worden ist, **dadurch gekennzeichnet, daß** bis zur Herstellung der Sprachkommunikationsverbindung zwischen dem Anrufer und dem von dem Anrufer ausgewählten Kommunikationspartner oder bis zu einer sonstigen Beendigung des Verfahrens keine Sprachkommunikationsverbindung zwischen einem späteren Anrufer und einem der dem Anrufer angebotenen Kommunikationspartner hergestellt wird.

2. Verfahren nach Anspruch 1, **dadurch gekennzeichnet, daß** die Herstellung der Sprachkommunikationsverbindung zwischen dem Anrufer und dem von dem Anrufer ausgewählten Kommunikationspartner gegenüber der Auswahl des Kommunikationspartners zeitverzögert erst dann erfolgt, wenn eine schon bestehende Sprachkommunikationsverbindung zwischen dem Kommunikationspartner und einem anderen Anrufer beendet worden ist.

3. Verfahren nach Anspruch 1 oder 2, **dadurch gekennzeichnet, daß** die Herstellung der Sprachkommunikationsverbindung zwischen dem Anrufer und dem Kommunikationspartner durch Anruf des Kommunikationspartners und Rückruf des Anrufers erfolgt.

4. Verfahren nach Anspruch 2 oder 3, **dadurch gekennzeichnet, daß** der Anrufer, vorzugsweise nach dem FIFO-Prinzip, in eine Warteschlange für den ausgewählten Kommunikationspartner eingereiht wird, wenn zwischen dem ausgewählten Kommunikationspartner und einem anderen Anrufer noch eine Sprachkommunikationsverbindung besteht.

5. Verfahren nach einem der Ansprüche 1 bis 4, **dadurch gekennzeichnet, daß** die sonstige Beendigung des Verfahrens nach einer festen vorbestimmten und/oder einer von dem jeweiligen Anrufer festgelegten Zeitdauer erfolgt.

6. Verfahren nach einem der Ansprüche 1 bis 5, **dadurch gekennzeichnet, daß** der Zugriff auf die Datenbank (1) über ein Datennetz (3) oder ein Telefonnetz (7) erfolgt.

7. Verfahren nach einem der Ansprüche 1 bis 6, **dadurch gekennzeichnet, daß** dem Anrufer mitgeteilt wird, ob der jeweilige Kommunikationspartner gegenwärtig frei ist.

8. Verfahren nach einem der Ansprüche 1 bis 7, **dadurch gekennzeichnet, daß** dem Anrufer mitgeteilt wird, ob eine Warteschlange für den jeweiligen Kommunikationspartner existiert und wie viele wartende Anrufer sich in der Warteschlange des jeweiligen Kommunikationspartners befinden.

## Claims

1. Process for setting up a speech communication connection between a caller and a communication partner, wherein a database (1) which contains data on a plurality of communication partners is provided, at least one communication partner from the database (I) is offered to the caller upon request by the latter, and a speech communication connection with at least one of the offered communication partners is automatically set up after the communication partner has been selected by the caller, **characterized in that** for setting up the speech communication connection between the caller and the communication partner selected by the caller, or until the process is terminated in another manner, no speech communication connection between a later caller and a communication partner offered to the caller is set up.

2. Process according to Claim I, **characterized in that** the setting up of the speech communication connection between the caller and the communication partner selected by the caller occurs with a delay relative to the selection of the commutation partner only after an already existing speech communication connection between the communication partner and another caller has been terminated.

3. Process according to Claim 1 or 2, **characterized in that** the setting up of the speech communication connection between the caller and the communication partner occurs via a call made by the communication partner and a call-back made by the caller.

4. Process according to Claim 2 or 3, **characterized in that** the caller is queued in a waiting queue for the selected communication partner, preferably according to the FIFO system, if a speech communication connection still exists between the selected communication partner and another caller.

5. Process according to one of Claims 1-4, **characterized in that** the termination of the process in another manner occurs after a fixed predetermined duration and/or after a duration established by the respective caller.

6. Process according to one of Claims 1-5, **characterized in that** the access to the database (1) occurs via a data network (3) or a telephone network (7).

7. Process according to one of Claims 1-6, **characterized in that** the caller is informed whether or not the respective communication partner is currently free.

8. Process according to one of Claims 1-7, **characterized in that** the caller is informed whether or not a waiting queue for the respective communication partner exists, and how many waiting callers are in the waiting queue of the respective communication partner.

## Revendications

1. Procédé pour établir une liaison de communication vocale entre un appelant et un partenaire de communication, dans lequel il est prévu une base de données (1) qui contient des données concernant une pluralité de partenaires de communication, au moins un partenaire de communication provenant de la base de données (1) est proposé à l'appelant à sa demande et une liaison de communication vocale est automatiquement établie avec au moins l'un des partenaires de communication proposés après que le partenaire de communication a été sélectionné par l'appelant, **caractérisé en ce que** jusqu'à l'établissement de la communication vocale entre l'appelant et le partenaire de communication sélectionné par l'appelant ou jusqu'à une autre interruption du procédé, aucune liaison de communication vocale entre un appelant ultérieur et l'un des partenaires de communication proposés à l'appelant n'est établie.

2. Procédé selon la revendication 1, **caractérisé en ce que** l'établissement de la communication vocale entre l'appelant et le partenaire de communication sélectionné par l'appelant ne s'effectue de manière retardée par rapport à la sélection du partenaire de communication que lorsqu'une liaison de communication vocale déjà existante entre le partenaire de communication et un autre appelant s'est achevée.

3. Procédé selon la revendication 1 ou 2, **caractérisé en ce que** l'établissement de la communication vocale entre l'appelant et le partenaire de communication s'effectue par appel du partenaire de communication et rappel de l'appelant.

4. Procédé selon la revendication 2 ou 3, **caractérisé en ce que** l'appelant est placé dans une file d'attente, de préférence selon le principe FIFO, pour le partenaire de communication sélectionné, s'il existe encore entre le partenaire de communication sélectionné et un autre appelant une liaison de communication vocale.

5. Procédé selon l'une quelconque des revendications 1 à 4, **caractérisé en ce que** l'autre interruption du procédé s'effectue après une durée fixe prédéterminée et/ou spécifiée par l'appelant respectif.

6. Procédé selon l'une quelconque des revendications 1 à 5, **caractérisé en ce que** l'accès à la base de données (1) s'effectue par l'intermédiaire d'un réseau de données (3) ou d'un réseau téléphonique (7).

7. Procédé selon l'une quelconque des revendications 1 à 6, **caractérisé en ce qu'**il est indiqué à l'appelant si le partenaire de communication respectif est libre à l'instant présent.

8. Procédé selon l'une quelconque des revendications 1 à 7, **caractérisé en ce qu'**il est indiqué à l'appelant s'il existe une file d'attente pour le partenaire de communication respectif et combien d'appelants sont en attente dans la file d'attente du partenaire de communication respectif.
